# FASCICULE DE BREVET EUROPEEN

(11) **EP 3 959 138 B1**
(45) Date de publication et mention de la délivrance du brevet: **25.02.2026**
(21) Numéro de dépôt: 20754314.1
(22) Date de dépôt: 23.04.2020
(51) Int. Cl.: B64D 33/02, F02C 7/045, F02C 7/047

(54) **ENTRÉE D'AIR DE NACELLE ET NACELLE COMPORTANT UNE TELLE ENTRÉE D'AIR**
GONDELLUFTEINLASS UND GONDEL MIT EINEM SOLCHEN LUFTEINLASS
NACELLE AIR INTAKE AND NACELLE COMPRISING SUCH AN AIR INTAKE

(30) Priorité: 26.04.2019 FR 1904431
(43) Date de publication de la demande: 02.03.2022
(73) Titulaire: Safran Nacelles, 76700 Gonfreville l'Orcher (FR)
(72) Inventeur: DIGEOS, Virginie Emmanuelle Anne Marie, 77550 MOISSY CRAMAYEL (FR); VERSAEVEL, Marc, 77550 MOISSY CRAMAYEL (FR); OLDHAM, Paul, 77550 MOISSY CRAMAYEL (FR); BOILEAU, Patrick, 77550 MOISSY CRAMAYEL (FR)
(74) Mandataire: Germain Maureau
(86) Numéro de dépôt international: PCT/FR2020/050694
(87) Numéro de publication internationale: WO 2020/217025

(56) Documents cités:
- EP-A2- 2 305 984
- FR-A1- 2 917 067
- FR-A1- 2 997 726
- FR-A1- 3 041 937
- FR-A1- 3 055 612

## Description

La présente invention concerne un ensemble propulsif d'aéronef comprenant une nacelle et un moteur tel qu'un turboréacteur, et concerne en particulier une entrée d'air d'une telle nacelle.

Un aéronef est mû par un ou plusieurs turboréacteurs logés chacun dans au moins une nacelle. La nacelle présente généralement une structure tubulaire comprenant une section d'entrée d'air en amont du turboréacteur, une section médiane destinée à entourer une soufflante du turboréacteur, et une section aval abritant les moyens d'inversion de poussée.

La section aval de la nacelle entoure le générateur de gaz du turboréacteur qui est terminé par une tuyère d'éjection située en aval du turboréacteur.

La section d'entrée d'air de la nacelle comporte notamment une lèvre avant de forme générale annulaire qui intercepte le flux d'air d'entrée de la nacelle qui est dirigé vers une soufflante.

Pour ce faire, le reste de la structure d'entrée d'air présente une structure sensiblement annulaire comprenant un panneau ou paroi externe assurant la continuité aérodynamique externe de la nacelle et un panneau ou paroi interne assurant la continuité aérodynamique interne de la nacelle, notamment avec le carter de soufflante au niveau de la section médiane. La lèvre d'entrée d'air assure la jonction entre ces deux parois en formant un bord d'attaque de la nacelle et peut notamment être intégrée au panneau externe formant ainsi une paroi principale de l'entrée d'air. De manière générale, la lèvre avant est constituée par une pièce de forme annulaire qui est directement fixée sur des cloisons de support intérieures à la nacelle. Cette pièce peut être formée par une pièce unique ou sectorisée en une pluralité de morceaux (deux, trois ou quatre typiquement), ceci dépendant généralement du diamètre et des besoins sur la nacelle. Dans le cas où la lèvre avant est formée de morceaux, ces secteurs sont assemblés par une éclisse et des rangées de fixations aux zones de jonctions pour former ladite lèvre.

On note aussi l'utilisation d'une cloison amont qui forme un volume annulaire derrière la lèvre avant en forme de « D ».

Plus précisément, la section d'entrée de nacelle comporte généralement :
- une paroi interne, de préférence munie d'une pièce acoustique interne sensiblement cylindrique ayant un bord amont et un bord aval, cette pièce formant une partie au moins d'une virole acoustique de l'entrée d'air étant appelée « inner barrel » en jargon anglo-saxon ;
- une paroi externe sensiblement cylindrique ;
- une lèvre avant reliant les parois interne et externe ;
- une bride de montage aval configurée pour le montage de la section d'entrée à une bride avant d'une paroi du turboréacteur; et
- une cloison arrière présentant une extrémité aval pour solidariser la partie externe de la paroi externe à la bride de montage aval.

Par ailleurs, l'entrée d'air comprend généralement un système de dégivrage. Un type de système de dégivrage ou d'antigivrage connu, présenté notamment par les documents EP 0 913 326 B1 ou US 2002/0179773 A1, comporte un tube circulaire faisant le tour de la nacelle, dans la lèvre, qui alimente en air chaud prélevé sur le turboréacteur, le volume intérieur de la lèvre avant de cette nacelle afin de réchauffer ses parois.

Par ailleurs pour réduire les émissions acoustiques des turboréacteurs, on garnit certaines parois intérieures de la nacelle avec des panneaux sandwich comportant une âme centrale présentant des cellules en forme de nid d'abeilles, qui est recouverte par une peau arrière intérieure étanche, et par une peau avant externe tournée vers la source sonore, qui est perforée ou poreuse.

Les cellules ouvertes constituent alors un dispositif du type résonateur de Helmholtz, qui contribue à fortement réduire les émissions acoustiques.

L'âme centrale du panneau sandwich peut comporter une seule épaisseur de cellules, ou deux épaisseurs séparées par une peau médiane micro-perforée, pour améliorer les performances acoustiques du panneau.

On dispose notamment ce type de panneaux acoustiques sur les parois internes de la veine annulaire d'air froid, dans le cas d'un turboréacteur à double flux, ainsi que sur la paroi interne de l'entrée d'air amont. Ces panneaux viennent notamment former la ou les pièce(s) acoustique(s) formant tout ou partie de la virole acoustique de l'entrée d'air, lesquels sont disposés dans l'espace intérieur délimité par la lèvre et les parois interne et externe. Le document FR 3 055 612 A1 divulgue par exemple une structure acoustique pour une nacelle d'aéronef qui comprend au moins un boîtier monobloc réalisé d'un seul tenant qui comporte : - des conduits délimités par une couche réflectrice, une couche d'une sous-structure acoustiquement résistive, deux parois latérales disposées dans deux plans longitudinaux et au moins une cloison intermédiaire disposée dans un plan longitudinal entre les deux parois latérales, - une paroi d'extrémité pour obturer les conduits, - la couche réflectrice, la couche de la sous-structure acoustiquement résistive, les deux parois latérales, la ou les cloison(s) intermédiaire(s) et ladite paroi d'extrémité étant réalisées d'un seul tenant, des bandes de cellules étant positionnées dans chacun des conduits du boîtier monobloc.

Le document FR 3 041 937 A1 divulgue une structure acoustique pour une nacelle d'aéronef qui comprend une sous-structure acoustiquement résistive, au moins une couche de cellules, une couche réflectrice et qui se caractérise en ce qu'elle comprend au moins une sous-structure monobloc qui compartimente la couche de cellules et qui intègre des éléments longilignes d'un système de dégivrage.

Il est connu, par exemple du document WO 2016/005711, de former la pièce acoustique avec la lèvre en les assemblant par brasage ou par collage, le procédé de brasage étant préféré aux vues des températures mises en jeu lors du dégivrage.

La lèvre étant en aluminium, des contraintes imposent d'utiliser un alliage compatible, tel que par exemple un alliage d'aluminium 6061 pour pouvoir procéder au brasage d'une structure alvéolaire, munie de cellules acoustiques, sur la lèvre pour l'intégration à ladite lèvre de la pièce acoustique.

Toutefois, le procédé de brasage des cellules acoustiques sur la lèvre d'entrée d'air entraîne un certain nombre d'inconvénients parmi lesquels on peut citer :
- une perte des caractéristiques mécaniques de l'aluminium ;
- un risque de déformation de la pièce lors du refroidissement ;
- un risque d'effondrement de l'extrados de la lèvre dans le four de brasage ;
- le développement complexe d'un outillage pour maintenir l'assemblage ;
- l'exigence de tolérances très faibles sur la lèvre, le nid d'abeilles et la paroi interne afin d'assurer un bon brasage de l'ensemble ;
- des difficultés pour traiter la lèvre contre la corrosion ont également été soulevées ;
- un risque de bouchage partiel des trous acoustiques de la structure alvéolaire de la pièce acoustique ce qui détériore la qualité d'absorption sonore.

Les risques d'assemblage sont nombreux, et il est souhaitable de trouver une solution afin de simplifier le procédé d'assemblage tout en assurant le dégivrage et le gain acoustique.

Le but de l'invention est de résoudre tout ou partie de ces inconvénients, notamment en proposant une entrée d'air de nacelle simple à réaliser et dont la construction de la lèvre peut être assurée de manière fiable.

A cet effet, la présente invention concerne une entrée d'air pour une nacelle de moteur d'aéronef selon la revendication 1.

Grâce à ces caractéristiques, il est possible de fabriquer de manière indépendante l'entrée d'air de la nacelle et la structure acoustique, sous forme d'au moins une virole par exemple, puis de les assembler ensemble quelques soient leurs matériaux respectifs, ce qui évite la mise en œuvre d'une étape commune de brasage des deux pièces ensemble et les inconvénients associés.

Une telle distance prédéterminée forme un espace entre les cellules acoustiques d'une part, et la paroi de l'entrée d'air s'étendant de la paroi interne à la lèvre avant d'autre part, permet d'assembler l'ensemble en impactant moins la lèvre.

On comprendra par l'expression « en regard de » qu'il est formé un espace directement entre les cellules acoustiques de la structure acoustique et de la paroi interne et/ou de la lèvre.

Cette distance prédéterminée doit être suffisamment importante pour éviter le contact des cellules acoustiques avec la paroi interne et/ou celle de la paroi de la lèvre, ceci même en présence de vibrations.

A l'inverse, cette distance prédéterminée doit être suffisamment faible pour garantir la résonnance de Helmholtz dans les cellules acoustiques formant cavité, la paroi interne et/ou la paroi de la lèvre présentant des perforations en regard des cellules acoustiques pour permettre au flux d'air léchant l'entrée d'air de produire ce phénomène de résonance de l'air dans les cavités de la structure acoustique. Selon l'invention revendiquée, la distance prédéterminée séparant les cellules acoustiques de la zone de la paroi interne et/ou de la lèvre est inférieure ou sensiblement égale à 1,5 mm. Cette distance est suffisante pour éviter le contact entre les deux éléments d'une part et d'autre part inférieure à 1,5mm pour conserver la performance acoustique du système.

De préférence, les cellules acoustiques, et plus généralement la structure acoustique, présentent ensemble une forme suivant le profil de la paroi interne et/ou de la lèvre de sorte que cette distance prédéterminée soit sensiblement homogène sur toute l'étendue de la structure acoustique.

Dans une configuration particulière, la structure acoustique présente une structure alvéolaire formant les cellules acoustiques et une peau acoustiquement résistive, de préférence formées en alliage métallique. Toutefois, d'autres matériaux peuvent être utilisés de sorte que la structure alvéolaire et la peau acoustiquement résistive peuvent être formés de tout matériaux compatibles de l'environnement et permettant d'obtenir de telles cellules acoustiques.

On comprendra par l'expression « peau résistive » ou « peau acoustiquement résistive » une peau de la structure acoustique permettant le maintien au moins en partie d'un flux d'air reçu par la structure acoustique depuis la veine d'air.

La structure acoustique rapportée est alors formée par les cellules acoustiques et la peau acoustiquement résistive.

La zone de la paroi interne et/ou de la lèvre en regard des cellules acoustiques de la structure acoustique est avantageusement percée pour assurer la fonction acoustique de la structure acoustique.

La zone percée forme alors une peau percée et permet la réception d'au moins en partie d'un flux d'air reçu depuis la veine d'air.

Plus particulièrement, la paroi de l'entrée d'air, en particulier la zone de la paroi interne ou de la lèvre, située en regard des cellules acoustiques présente des perforations de sorte que la structure acoustique, avec la paroi perforée formant localement une peau perforée, forment ensemble un panneau acoustique configuré pour former un résonateur de Helmholtz, contribuant ainsi à réduire les émissions acoustiques.

La fonction acoustique de la structure acoustique peut être réalisée lorsque la structure acoustique rapportée formée par les cellules acoustiques et la peau acoustiquement résistive est montée avec la zone percée.

Selon des configurations avantageuses, les moyens de fixation de la structure acoustique à la nacelle sont des rivets et/ou un soudage et/ou un collage. Avantageusement, la structure acoustique est fixée au niveau de son extrémité aval, sur une cornière ou bride, ou sur une cloison.

Avantageusement encore, la structure acoustique est montée en porte à faux par rapport à cette cornière ou bride et/ou cette cloison.

Selon une caractéristique particulière, la structure acoustique est fixée au niveau de son extrémité amont, avec la paroi interne et/ou la lèvre. Dans ce cas, la structure n'est pas montée en porte à faux.

Selon une caractéristique technique, l'entrée d'air comporte au moins en partie un système de dégivrage générant un flux d'air de dégivrage de l'entrée d'air, laquelle est configurée de sorte à guider ce flux d'air au travers d'orifices situés en amont de la structure acoustique, ou au travers de perforations de la paroi interne et/ou de la lèvre de la zone située en regard de la structure acoustique (40) formant une peau perforée pour ladite structure acoustique (40).

Selon un autre aspect, l'invention concerne aussi une nacelle pour moteur d'aéronef selon la revendication 9.

Selon un autre aspect, l'invention concerne aussi un procédé de fabrication d'une entrée d'air selon la revendication 10.

Selon une caractéristique technique, la structure acoustique est formée par brasage, fabrication additive, emboutissage, formage de tôles rapportées, moulage ou injection. D'autres caractéristiques et avantages de l'invention ressortiront à la lecture de la description qui suit, donnée uniquement à titre d'exemple, en référence aux figures annexées, qui illustrent :
[Fig. 1A] et
[Fig. 1B], des coupes schématiques partielles d'un mode de réalisation d'une nacelle et d'une entrée d'air ;
[Fig. 2A] et
[Fig. 2B], des vues en coupe d'une entrée d'air selon deux modes de réalisation ;
[Fig. 3], une vue en coupe d'une structure acoustique selon un mode de réalisation ; [Fig. 4A], une vue en perspective d'une structure acoustique selon un autre mode de réalisation ;
[Fig. 4B], une vue détaillée de moyens de fixation d'une structure acoustique selon le mode de réalisation illustré sur la figure 4A ;
[Fig. 5], une vue schématique en perspective d'une partie d'entrée d'air selon un mode de réalisation ;
[Fig. 6], une vue schématique en perspective d'une partie d'entrée d'air selon un mode de réalisation ;
[Fig. 7], une vue schématique en perspective d'une partie d'entrée d'air selon un mode de réalisation ;
[Fig. 8], une vue schématique en perspective d'une partie d'entrée d'air selon un mode de réalisation ;
[Fig. 9A],
[Fig. 9B],

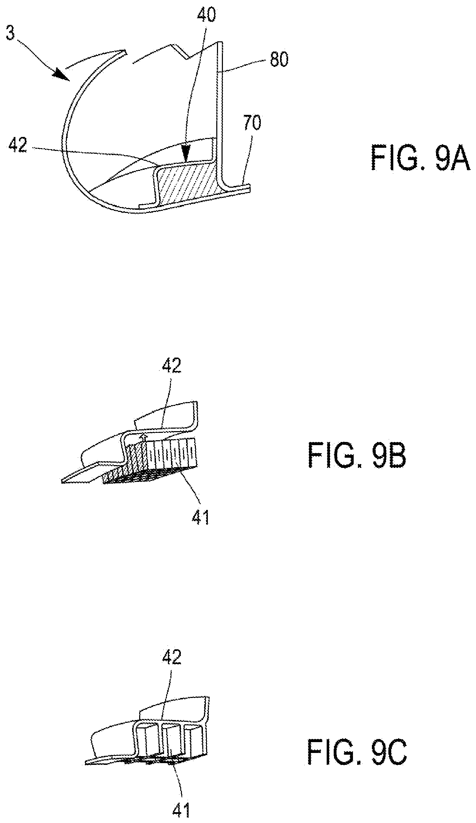

[Fig. 9C], une vue schématique en perspective éclatée d'une partie d'entrée d'air selon un mode de réalisation ;,

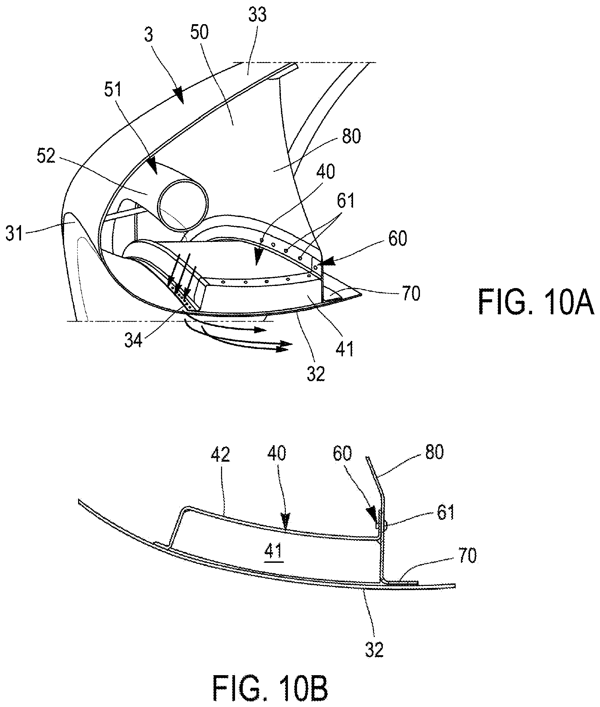

[Fig. 10A] et
[Fig. 10B], des vues en coupes d'un mode de réalisation détaillé avec un système de dégivrage ;

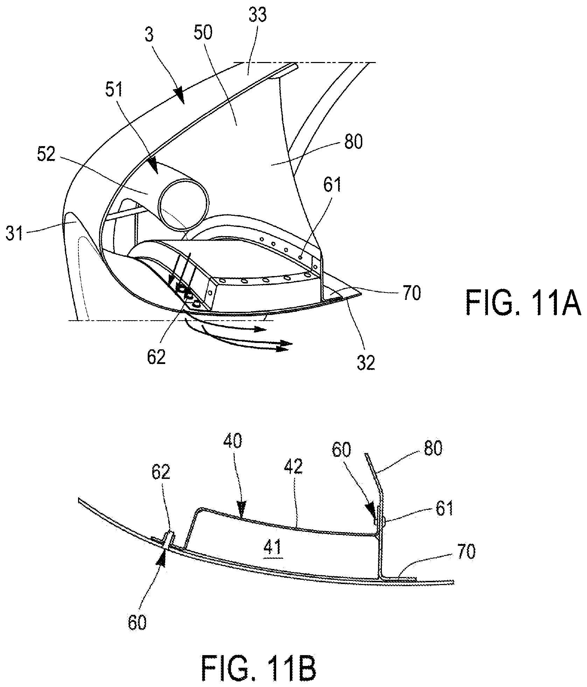

[Fig. 11A] et
[Fig. 11B], des vues en coupes d'un autre mode de réalisation détaillé avec un système de dégivrage.

Sur l'ensemble de ces figures, des références identiques ou analogues désignent des organes ou ensembles d'organes identiques ou analogues.

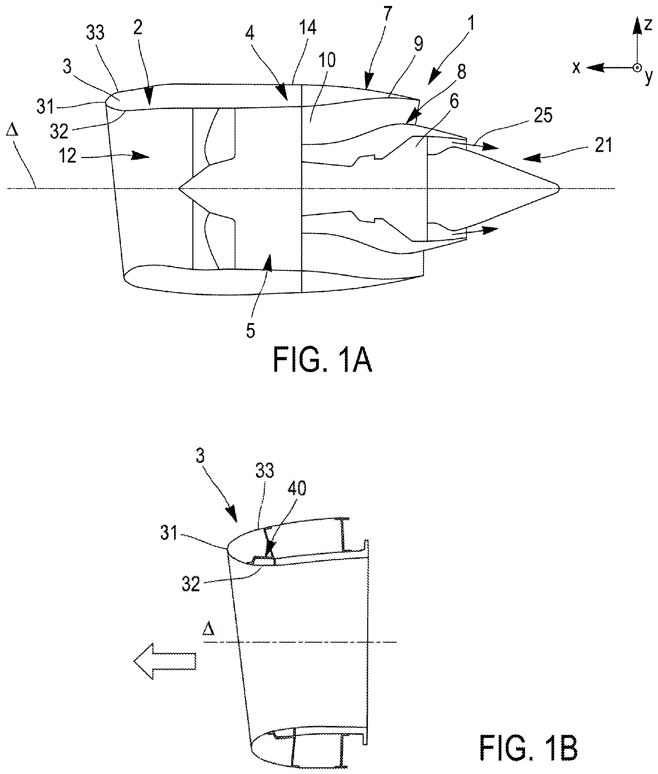

Comme représenté sur les figures 1A et 1B, une nacelle 1 selon l'invention présente une forme sensiblement tubulaire selon un axe longitudinal Δ (direction parallèle à X).

La nacelle 1 comprend une section amont 2 avec une lèvre d'entrée d'air 3, une section médiane 4 entourant une soufflante 5 d'un moteur 6 tel qu'un turboréacteur double flux et une section aval 7 abritant un système d'inversion de poussée (non visible), la nacelle servant à canaliser les flux d'air généré par le moteur 6.

L'entrée d'air 3 se divise en deux parties, à savoir d'une part, une lèvre 31 d'entrée adaptée pour permettre la captation optimale vers le turboréacteur de l'air nécessaire à l'alimentation de la soufflante et des compresseurs internes du turboréacteur, et d'autre part, une structure aval 32, 33 sur laquelle est rapportée la lèvre et destinée à canaliser convenablement l'air vers les aubes de la soufflante. L'ensemble est rattaché en amont d'un carter de la soufflante appartenant à la section médiane 4 de la nacelle 1.

La section aval 7 comprend quant à elle une structure interne 8 (encore appelée « inner fixed structure » ou « IFS ») entourant la partie amont du turboréacteur 6, une structure externe (encore appelée « outer fixed structure » ou « OFS ») 9 formant le canal flux froid et fixes par rapport au moteur, et un capot mobile comportant des moyens d'inversion de poussée. La structure interne ou IFS 8 ainsi que la structure externe ou OFS 9 sont fixes par rapport au capot mobile.

L'IFS 8 et l'OFS 9 délimitent une veine 10 permettant le passage d'un flux d'air 12 pénétrant la nacelle 1 au niveau de la lèvre d'entrée d'air 3.

La nacelle 1 comporte un sommet 14 destiné à recevoir un mât réacteur d'attache permettant de fixer ladite nacelle 1 à une aile de l'aéronef. Pour ce faire, ledit sommet 14 comporte des moyens pour fixer ledit mât réacteur.

La nacelle de turboréacteur est en particulier suspendue au mât réacteur, par le biais d'une poutre au niveau de ce sommet 14.

La nacelle 1 se termine par une tuyère d'éjection 21.

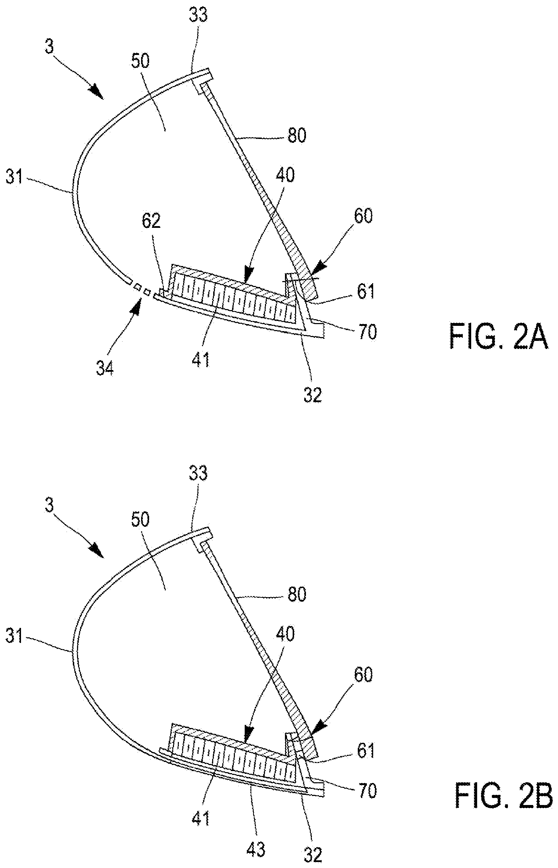

Comme représenté plus spécifiquement sur la figure 2A, l'entrée d'air 3 comporte une lèvre avant 31 formant bord d'attaque de la nacelle, ladite lèvre 31 reliant une paroi interne 32 sensiblement cylindrique et une paroi externe 33 sensiblement cylindrique. En d'autres termes, l'entrée d'air 3 présente une structure sensiblement annulaire comprenant la paroi externe 33 assurant la continuité aérodynamique externe de la nacelle 1 et la paroi interne 32 assurant la continuité aérodynamique interne de la nacelle 1, notamment avec le carter de soufflante au niveau de la section médiane 4.

La lèvre 31 d'entrée d'air assure la jonction entre ces deux parois 32, 33 et peut notamment être intégrée à la paroi interne 32 et/ou externe 33 formant ainsi une paroi principale de l'entrée d'air 3.

En d'autres termes, les parois 31, 32, 33 peuvent être formées d'un seul tenant ou monobloc formant ainsi la paroi principale de l'entrée d'air.

En vue de diminuer la pollution sonore générée par le turboréacteur, au moins une partie de la paroi interne 32 de l'entrée d'air 3 est équipée d'une structure acoustique 40, laquelle est située dans l'espace délimité par la paroi principale à savoir la paroi interne 32, la paroi externe 33 et la lèvre avant 31.

Cette structure acoustique 40 ou d'atténuation acoustique se présente sous la forme d'un panneau à âme alvéolaire formant une structure alvéolaire dont les alvéoles délimitent des cellules acoustiques 41, la structure acoustique 40 comprenant en outre une peau interne 42 pleine assurant notamment la tenue mécanique du panneau.

Cette structure acoustique 40 est de préférence formée en alliage métallique. Dans le cas où les températures mises en jeu le permettent, d'autres matériaux peuvent être utilisés. Ces matériaux peuvent aussi être fonction du procédé de fabrication utilisé, par exemple par moulage en thermoplastique, par fabrication additive en aluminium, etc.

L'entrée d'air 3 comprend en outre, au niveau de l'une de ses parois 31, 32, 33 de la paroi principale, en particulier au niveau d'une zone 43 s'étendant de la paroi interne 32 à la lèvre 31, des perforations 44 (non illustrées sur ces figures 2A et 2B) localisées en regard des cellules acoustiques 41 de la structure acoustique 40.

Cette zone 43 de perforations de l'entrée d'air 3 forme localement une peau perforée ou peau acoustique destinée être exposée au bruit et qui, associée à la structure acoustique 40, forme un résonateur ou résonateur de Helmholtz apte à piéger les ondes sonores.

Par ailleurs, la structure acoustique 40, formée notamment par la structure à âme alvéolaire 41 et par la peau pleine 42 est une pièce rapportée, fabriquée distinctement de la paroi principale de l'entrée d'air 3 et fixée à ladite entrée d'air 3 par des moyens de fixation 60.

Du fait que cette structure acoustique 40 est une pièce rapportée, il est possible de fabriquer de manière indépendante l'entrée d'air 3 de la nacelle 1 et ladite structure acoustique 40, puis de les assembler ensemble dans une étape ultérieure de fabrication, ceci quelques soient leurs matériaux respectifs. Ceci évite notamment la mise en œuvre d'une étape commune de fabrication, par exemple de brasage, des deux pièces ensemble et toutes les contraintes liées à une telle fabrication.

La structure acoustique 40 est disposée en regard de la paroi s'étendant de la paroi interne 32 à la paroi de la lèvre 31, c'est-à-dire la partie de l'entrée d'air 3 orientée du côté de la veine d'entrée d'air, et placée à une distance d prédéterminée configurée pour que les cellules acoustiques 41 de la structure acoustique 40 ne soient pas en contact avec cette paroi principale, ceci tout en garantissant une fonction d'atténuation acoustique.

Une telle distance prédeterminée forme un espace entre les cellules acoustiques d'une part, et, la paroi de l'entrée d'air 3 formant localement une peau percée 43, permet de faciliter l'assemblage de l'entrée d'air 3 en impactant moins la lèvre 3.

Cette distance d est choisie de sorte à être suffisamment importante pour éviter le contact des cellules acoustiques 41 avec la paroi principale, ceci même en présence de vibrations en phase d'utilisation.

A l'inverse, cette distance d est choisie de sorte à être suffisamment faible pour garantir la résonnance de Helmholtz dans les cellules acoustiques 41 formant cavité, la zone 43 de la paroi interne 32 et/ou la paroi de la lèvre 31 présentant des perforations 44 en regard des cellules acoustiques 41 pour permettre à l'air léchant l'entrée d'air 3 de produire ce phénomène de résonance de l'air dans les cavités de la structure acoustique 40.

Dans ce mode de réalisation, cette distance d prédéterminée est sensiblement égale à 1,5 mm.

L'entrée d'air 3 est fixée à la nacelle au moyen d'une bride de fixation. Plus précisément, la section médiane 4 de la nacelle 1 comporte un panneau interne léchée par le flux d'air et délimitant localement la veine de flux froid en entourant la soufflante 5, ce panneau formant un carter de soufflante.

La paroi interne 32 de l'entrée d'air 3 est destinée à être rattaché à un carter de soufflante (non visible) du turboréacteur et à constituer ainsi une partie fixe de la section amont 2.

Par ailleurs, la paroi externe 33 de l'entrée d'air 3 est destinée à être fixée à une paroi externe de la section médiane.

La jonction entre le carter de soufflante et la paroi interne 32 de l'entrée d'air 3 est assurée par l'intermédiaire d'au moins une bride de fixation, les brides étant réparties de façon homogène circonférentiellement par rapport à l'entrée d'air 3.

Chacune des brides de montage comporte une partie arrière (non illustrée) localisée à une extrémité amont d'une paroi du turboréacteur, par exemple du carter de soufflante, et une partie avant solidaire de la paroi interne 32 de l'entrée d'air, ces deux parties étant solidarisées les unes par rapport aux autres de sorte permettent le centrage et la fixation de l'entrée d'air 3 sur la nacelle 1.

Dans ce mode de réalisation (figure 2A), la structure acoustique 40 est fixée à son extrémité aval sur une bride 70 qui est distincte de la bride de montage assurant la fixation de l'entrée d'air 3 à la section médiane 4. Dans une configuration alternative, la structure acoustique peut être fixée sur la même bride en particulier sur la partie avant de la bride solidaire de l'entrée d'air 3 et configurée pour coopérer avec la bride arrière associée solidaire du carter de soufflante. Cela permet de réduire le nombre d'interface de fixation dans l'entrée d'air de la nacelle et donc de réduire sa masse.

Avantageusement, l'extrémité amont de la structure acoustique 40 peut être fixée à la paroi principale, en particulier à la paroi interne 32 ou celle de la lèvre 31, par des moyens de fixation amont 62.

Alternativement, pour réduire la masse, la structure acoustique 40 peut être montée en porte à faux (voir la figure 2B) sur cette bride 70. La structure acoustique 40 s'étend comme un panneau d'une extrémité aval où elle est fixée par des moyens de fixation aval 61 à ladite bride 70 jusqu'à une extrémité amont dirigée vers la lèvre 31 à l'intérieur de celle-ci où elle est maintenue en porte à faux du fait de la rigidité de la structure acoustique 40. Ainsi, la structure acoustique 40 est fixée seulement sur la bride 70 située en aval des cellules acoustiques 41, c'est-à-dire à son extrémité aval.

Les moyens de fixation 60, 61, 62 de la structure acoustique 40 formant virole à la nacelle 1 sont par exemple des rivets et/ou un soudage et/ou un collage.

Selon les modes de réalisation illustrés sur les figure 2A et 2B, la peau acoustiquement résistive 42 de la structure acoustique 40 comporte une extrémité aval saillante formant une patte de fixation, laquelle est configurée pour venir localement être accolée à la bride 70 de fixation et préférentiellement être traversée par des rivets 61 pour assurer la fixation.

En amont de la structure acoustique 40, la peau acoustiquement résistive 42 est configurée pour recouvrir latéralement les cellules acoustiques 41.

Dans la configuration illustrée figure 2A, cette peau acoustiquement résistive 42 se prolonge en amont des cellules acoustiques 41 et présente une extrémité saillante formant une patte de fixation pour venir localement être accolée à la paroi interne 32 de l'entrée d'air 3 où elle peut être fixée par des moyens de fixation amont 62.

On notera que la structure acoustique 40 de façon générale, notamment la peau acoustiquement résistive 42 et les cellules acoustiques 41 peuvent être formée d'une seule et même pièce. Ceci est notamment le cas lorsque la pièce résulte d'une fabrication de type fabrication additive ou par injection.

Dans la configuration illustrée figure 2B, cette peau acoustiquement résistive 42 se prolonge en amont des cellules acoustiques 41 et présente une extrémité suspendue disposée en regard de la paroi principale, la structure acoustique 40 étant montée en porte à faux.

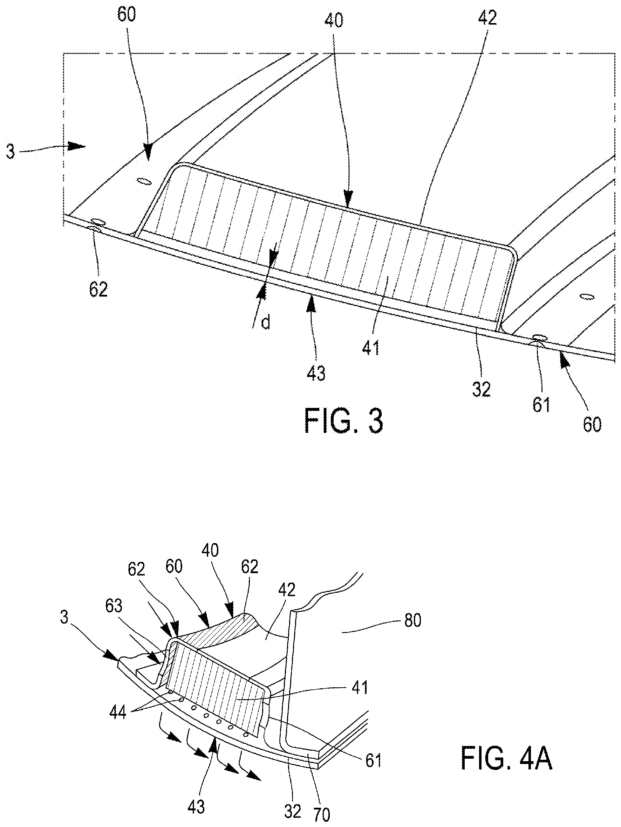

En comparaison, la figure 3 illustre un mode de réalisation où la structure acoustique 40 n'est pas fixée à une bride 70 mais interfacée directement avec la paroi interne 32 au niveau de ses deux extrémités amont et aval. En d'autres termes, la structure acoustique 40 est fixée directement à la paroi interne 32 au niveau de ses deux extrémités amont et aval.

De cette manière, la peau arrière dite acoustiquement résistive 42 est configurée pour recouvrir latéralement les cellules acoustiques 41 en amont et en aval de l'âme alvéolaire 41 et présente des extrémités saillantes amont et aval formant des pattes de fixation pour venir chacune localement être accolées à la paroi interrne 32 de l'entrée d'air 3 ou elle sont traversées par des rivets 62.

Dans ces modes de réalisation illustrés sur les figures 2A et 3, la peau arrière acoustiquement résistive 42 supporte l'âme alvéolaire délimitant les cellules acoustiques 41 et le dimensionnement de la partie latérale de la peau arrière bordant les cellules alvéolaires permet, par le choix de sa hauteur et en fonction de l'épaisseur des cellules acoustiques, de prédéterminer la distance d qui sépare la paroi principale de l'entrée d'air 3 avec lesdites cellules acoustiques 41.

Alternativement, la figure 4A illustre un mode de réalisation de ces fixations où ce sont des pièces rapportées formant des cornières qui recouvrent latéralement les bords latéraux délimitant l'âme alvéolaire 41 de la structure acoustique 40.

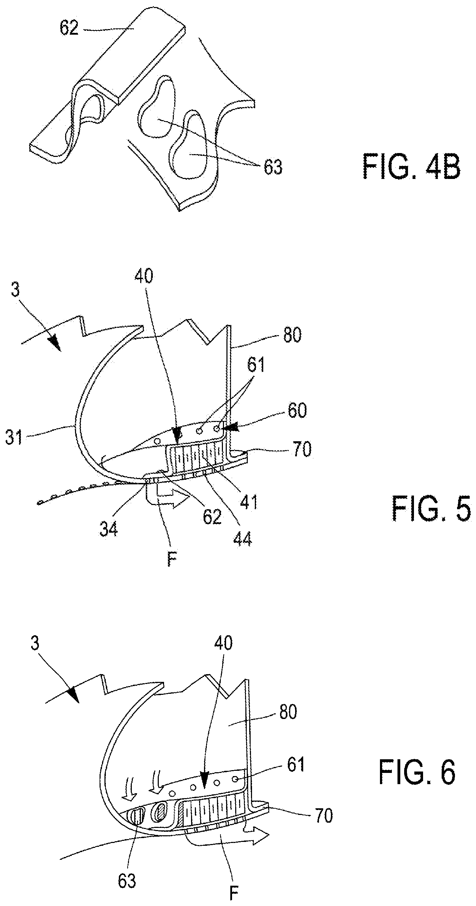

Ces cornières sont illustrées en détail sur la figure 4B et présentent une extrémité supérieure configurée pour être fixée à la peau acoustiquement résistive 42 et une extrémité inférieure configurée pour être fixée par les rivets 61, 62 à la paroi interne 32, de manières similaires aux pattes de fixation décrites précédemment. Ces extrémités inférieure et supérieure sont reliées par une paroi configurée pour border l'âme alvéolaire 41 de la structure acoustique 40.

L'entrée d'air 3 comporte en outre au moins une partie d'un système de dégivrage 51 et générant un flux d'air de dégivrage de l'entrée d'air 3, comprenant généralement un tube 52 logé dans un espace intérieur 50 (voir les figures 10A et 11A) délimité par la cloison 80, la lèvre 31 et les parois interne 32 et externe 33.

L'entrée d'air 3 peut comporter une cloison 80 qui forme un volume annulaire derrière la lèvre 31 avant délimitant avec elle et, le cas échéant avec les parois interne 32 et externe 33 en fonction de la géométrie, un volume annulaire globalement en forme de « D ».

Cette cloison 80 est reliée de préférence à la paroi interne 32 au niveau de la bride 70 de fixation (voir la figure 2). Selon un mode de réalisation particulier, la cloison 80 et la bride 70 peuvent être formées d'une seule et même pièce. Dans une configuration également, la structure acoustique 40 peut être fixée au niveau d'une zone située en aval des cellules acoustiques 41, sur cette cloison 80.

De façon générale, l'entrée d'air 3 est configurée de sorte à guider un flux d'air chaud généré par le système de dégivrage au travers d'orifices 34 situés en amont de la structure acoustique 40 (voir par exemple la figure 2A), ou au travers des perforations 44 de la paroi interne.

En référence à la figure 2A, l'entrée d'air 3 comporte juste en amont de la structure acoustiques 40 une succession d'orifices 34 répartis sur le pourtour annulaire de ladite entrée d'air 3 et qui permettent un débit d'air chaud formant un film sensiblement régulier aspiré vers l'aval dans la veine de la nacelle, et venant recouvrir par une couche limite d'air la zone 43 de la paroi principale, en particulier de la paroi interne 32 et/ou la paroi de la lèvre 31, présentant les perforations 44 en regard des cellules acoustiques 41.

Cette couche limite d'air chaud permet de réchauffer la paroi interne 32 et/ou la paroi de la lèvre 31 pour éviter la formation de givre, ou réaliser un dégivrage garantissant une bonne atténuation acoustique malgré les conditions favorables à la formation de givre.

En particulier, le film d'air chaud entraîne une déviation des gouttelettes d'air arrivant en amont, qui les éloigne de la zone 43 présentant les perforations en regard des cellules acoustiques, ainsi qu'une évaporation des gouttelettes ayant traversé ce film, qui se sont déposées sur ce panneau.

Le motif de ces orifices 34 et la forme de ces orifices 34, en particulier le diamètre, la répartition, la conicité ou l'inclinaison de ces orifices 34, sont ajustés de manière à optimiser l'épaisseur de la couche limite d'air chaud, et à favoriser la déviation de la trajectoire des gouttes par rapport à la paroi principale de la nacelle, en particulier de la paroi interne 32 et/ou la paroi de la lèvre 31.

Dans les exemples illustrés, la partie amont de la lèvre avant 31 et la partie tournée radialement vers l'extérieur, ne présentent pas de structure acoustique et sont réchauffées de manière habituelle par la circulation d'air chaud dans le volume annulaire 50.

On obtient ainsi un compromis permettant un placement le plus en amont possible d'une structure acoustique sur l'entrée d'air 3 de la nacelle 2, assurant de bonnes performances acoustiques, avec un système de dégivrage efficace consommant un débit limité d'air chaud, et avec des pertes aérodynamiques qui restent faible.

Afin d'obtenir une couche limite d'air chaud comportant un débit approprié, lui permettant de lécher en permanence cette zone 43 formant peau acoustique à la structure acoustique 40, il est intéressant d'ajuster le débit d'air chaud en fonction des conditions de fonctionnement du turboréacteur par des moyens d'ajustement de débit. En effet si la couche limite se décolle de cette paroi, on n'a plus de dégivrage efficace. En particulier au décollage de l'aéronef on obtient une pression élevée d'air chaud fournie par le compresseur du turboréacteur, et la dépression au niveau de la lèvre 31 est importante, on réalisera alors un débit d'injection d'air chaud faible.

En descente on obtient une pression d'air chaud plus faible fournie par le compresseur, et la dépression au niveau de la lèvre 31 est aussi faible, on réalisera alors un débit d'injection d'air chaud important.

Selon un mode de réalisation alternatif et/ou complémentaire, l'espace formé entre les cellules alvéolaires 41 et la paroi interne 32 (et/ou la paroi 31) communique avec l'espace intérieur 50 de la lèvre de sorte que l'air chauffé dans ce volume par le système de dégivrage peut circuler vers cet espace pour être évacué au travers des perforations 44 de la paroi interne 32.

Dans le cas où la structure acoustique est en porte à faux dont les moyens de fixation 60, 61 sont situés seulement en aval des cellules acoustiques 41 (voir la figure 2), cette communication fluidique peut être assurée au travers de l'ouverture définie entre l'extrémité amont de la structure acoustique et la paroi de l'entrée d'air séparées d'une distance correspondant à la distance prédéterminée d .

Dans le cas où la structure acoustique 40 présente un moyen de fixation amont 62, cedit moyen de fixation amont 62 peut former un obstacle à cette communication fluidique. Dans ce cas, ce moyen de fixation telle qu'une cornière (voir les figures 4A et 4B) peut être ajourée de sorte que le flux d'air chaud peut traverser des orifices 63 de cette cornière.

On notera que l'utilisation d'une structure acoustique 40 en porte à faux présente un avantage important étant donné qu'une tel moyen de fixation en aval de la structure acoustique formant un système de suspension est compatbile avec un système de dégivrage électrique dont le positionnement peut être situé au plus juste entre les cellules acoustiques 41 et la peau acoustique 43 formée localement par la paroi principale, dans l'espace prédéterminé de 1,5 mm par exemple.

Une telle entrée d'air selon l'invention est particulièrement avantageuse en terme de procédé de fabrication. Un tel procédé de fabrication de l'entrée d'air 3 comprend les étapes suivantes :
- d'une part, une étape de fabrication d'une lèvre 31 et de tout ou partie des parois interne 32 et/ou externe 33;
- d'autre part, une étape de fabrication de la structure acoustique 40.

La structure acoustique 40 est formée par exemple par brasage, fabrication additive, emboutissage, formage de tôles rapportées, moulage ou injection. Bien entendu cette liste n'est pas exhaustive et d'autres procédé de fabrication peuvent être utilisés.

Ces deux étapes étant disctinctes, le choix des matériaux pour leur fabrication peut être plus simple, plus adapté et plus maitrisé tout en permettant une économie.

Une fois ces deux pièces fabriquée, la fabrication se poursuit par une étape d'assemblage de la structure acoustique 40 avec ladite paroi fabriquée formant la lèvre 31 et tout ou partie des parois interne 32 et/ou externe 33.

On notera par exemple que la structure acoustique peut être formée d'un seul tenant avec la cloison 80 et/ou la bride 70. Dans ce cas, les moyens de fixation de la structure acoustique à l'entrée d'air peuvent être formés par ceux de la cloison 80 et/ou la bride 70 à l'entrée d'air

Dans ce cas, la cloison 80 et la bride 70 désignent des parties d'une même pièce. Des exemples de réalisations avec une telle pièce sont illustrés sur les figures 5, 6, 7, 8 et 9. Plus précisément, la figure 5 illustre un mode de réalisation substantiellement similaire à celui de la figure 2A, dans laquelle la cloison 80 et la bride 70 sont formées d'un seul tenant. La structure acoustique 40 s'étend comme un panneau d'une extrémité aval où elle est fixée par des moyens de fixation aval 61 à la partie 70 de la pièce formant bride ou pieds de fixation de la cloison 80, jusqu'à une extrémité amont dirigée vers la lèvre 31 à l'intérieur de celle-ci où elle fixée à la paroi principale en particulier la paroi interne 32 ou celle de la lèvre 31, par des moyens de fixation amont 62.

L'entrée d'air 3 est configurée de sorte à guider ce flux F d'air au travers de perçages ou d'orifices 34 situés en amont de la structure acoustique 40.

La figure 6 illustre un mode de réalisation d'une entrée d'air 3 qui se distingue de celle illustrée sur la figure 5 essentiellement en ce que, en amont de la structure acoustique 40, la peau acoustiquement résistive 42 est configurée pour recouvrir latéralement les cellules acoustiques 41 et présente une extrémité saillante formant une patte de fixation pour venir localement être accolée à la paroi interrne 32 de l'entrée d'air 3 ou elle est fixée par des moyens de fixation 62 de type soudage ou collage sur cette figure 6. La peau acoustiquement résistive 42 recouvrant latéralement les cellules acoustiques 41 est en outre ajourée par des orifices 63 de sorte que le flux d'air chaud peut traverser des orifices 63, similaires à ceux illustrés figure 4B.

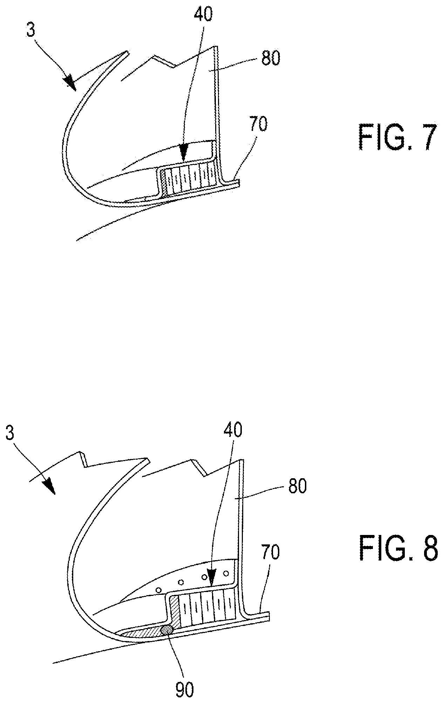

La figure 7 illustre un mode de réalisation d'une entrée d'air 3 qui se distingue de celle illustrée sur la figure 5 essentiellement en ce que les moyens de fixation amont 62 et aval 61 ne sont pas de type rivets mais de type soudage et/ou collage et/ou brasage. Dans le cas du brasage, celui-ci est possible seulement pour les moyens de fixation aval 61 au niveau de la bride 70. S'agissant des moyens de fixation amont 62, d'autres moyens de fixation sont mis en œuvre pour éviter les inconvénients liés au brasage de la structure acoustique avec la lèvre.

La figure 8 illustre un mode de réalisation d'une entrée d'air 3 qui se distingue de celle illustrée sur la figure 5 essentiellement en ce que la structure acoustique 40 est montée de la même façon que si elle était en porte à faux (voir la figure 2B) sur la partie 70 de la pièce formant localement bride 70. La structure acoustique 40 s'étend comme un panneau d'une extrémité aval où elle est fixée par des moyens de fixation aval 61 à ladite bride 70 à une extrémité amont dirigée vers la lèvre 31 à l'intérieur de celle-ci où elle est maintenue en porte à faux du fait de la rigidité de la structure acoustique. Toutefois, un joint 90 est interposé entre l'extrémité amont de la structure acoustique en particulier de la patte formée dans le prolongement amont de la peau acoustiquement résistive 42 recouvrant latéralement les cellules acoustiques 41, et la paroi principale de l'entrée d'air. Cela permet une solution plus légère que d'utiliser des moyens de fixation amont 62.

Enfin, la figure 9 illustre un mode de réalisation d'une entrée d'air comparable à celle de la figure 7 où sont illustrées deux vues détaillées des cellules acoustiques 41 de l'âme alvéolaire. Ainsi sur l'écorché 9A une solution est illustrée dans laquelle les cellules acoustiques sont formées par une structure de type nid d'abeille rapportée sur la peau acoustiquement résistive 42 tandis que l'écorché 9C illustre une vue où les cellules acoustiques sont formées d'un seul tenant avec la peau acoustiquement résistive 42, la structure délimitant ensemble un volume alvéolé.

Les figures 10A et 10B illustrent un mode de réalisation détaillé sur lequel la cloison 80 et la bride 70 sont également formées d'un seul tenant et délimitant avec les parois interne 32 et externe 33 et avec la lèvre 31 un volume annulaire 50 à l'intérieur duquel est logé une partie du système de dégivrage 51 générant un flux d'air de dégivrage de l'entrée d'air 3. L'entrée d'air est ici similaire à celle illustrée sur la figure 8, l'entrée d'air comprenant un joint 90 interposé entre l'extrémité amont de la structure acoustique 40 en particulier de la patte formée dans le prolongement amont de la peau acoustiquement résistive 42 recouvrant latéralement les cellules acoustiques 41, et la paroi principale de l'entrée d'air 3.

Les figures 11A et 11B illustrent un mode de réalisation sensiblement similaire à l'entrée d'air illustrée sur les figures 2A et 5 à la différence que les moyens de fixation amont 61 et aval 62 comprennent des rivets.

L'invention est décrite dans ce qui précède à titre d'exemple. Il est entendu que l'homme du métier est à même de réaliser différentes variantes de réalisation de l'invention sans pour autant sortir du cadre de l'invention définie par les revendications suivantes.

## Revendications

1. Entrée d'air (3) pour une nacelle (1) de moteur (6) d'aéronef, l'entrée d'air (3) comportant une lèvre (31) avant reliant une paroi interne (32) sensiblement cylindrique et une paroi externe (33) sensiblement cylindrique, l'entrée d'air comportant au moins une structure acoustique (40) comprenant des cellules acoustiques (41), la structure acoustique (40) est située dans un espace (50) délimité par la paroi interne (32), la paroi externe (33) et la lèvre (31) avant, la structure acoustique (40) étant une pièce rapportée fixée à l'entrée d'air (3) par des moyens de fixation (60), les cellules acoustiques de la structure acoustique (40) étant disposées en regard d'une zone de la paroi interne (32) et/ou de la lèvre (31) à une distance (d) prédéterminée configurée pour que les cellules acoustiques (41) de la structure acoustique (40) ne soient pas en contact avec la paroi interne (32) et/ou de la lèvre (31) tout en garantissant une fonction d'atténuation acoustique, l'entrée d'air étant **caractérisée en ce que** la distance prédéterminée séparant les cellules acoustiques (41) de ladite zone de la paroi interne (32) et/ou de la lèvre (31) est inférieure à 1,5 mm ou sensiblement égale à 1,5 mm.

2. Entrée d'air (3) selon l'une quelconque des revendications précédentes, la structure acoustique (40) étant fixée au niveau de son extrémité aval, sur une cornière ou bride (70) ou une cloison (80).

3. Entrée d'air (3) selon l'une quelconque des revendications précédentes, la structure acoustique (40) étant fixée au niveau de son extrémité amont, avec la paroi interne (32) et/ou la lèvre (31).

4. Entrée d'air (3) selon la revendication 2, la structure acoustique (40) étant montée en porte à faux par rapport à cette cornière ou bride (70) ou cloison (80).

5. Entrée d'air (3) selon l'une quelconque des revendications précédentes, la structure acoustique (40) présentant une structure alvéolaire (41) et une peau acoustiquement résistive (42), de préférence formées en alliage métallique.

6. Entrée d'air (3) selon l'une quelconque des revendications précédentes, la structure acoustique (40) étant formée par brasage, fabrication additive, emboutissage, formage de tôles rapportées, moulage ou injection.

7. Entrée d'air (3) selon l'une quelconque des revendications précédentes, comportant un système de dégivrage générant un flux d'air de dégivrage de l'entrée d'air (3), laquelle est configurée de sorte à guider ce flux d'air au travers d'orifices (34) situés en amont de la structure acoustique, et/ou au travers de perforations (44) de la paroi interne (32) et/ou de la lèvre (31) de la zone située en regard de la structure acoustique (40) formant une peau perforée pour ladite structure acoustique (40).

8. Entrée d'air (3) selon l'une quelconque des revendications précédentes, les moyens de fixation (60) de la structure acoustique (40) à la nacelle étant des rivets et/ou un soudage et/ou un collage.

9. Nacelle (1) pour moteur (6) d'aéronef comportant une entrée d'air (3) selon l'une quelconque des revendications précédentes.

10. Procédé de fabrication d'une entrée d'air (3) selon l'une quelconque des revendications 1 à 8, comprenant les étapes suivantes :
- une étape de fabrication d'une lèvre (31) et de tout ou partie des parois interne (32) et/ou externe (33) ;
- une étape de fabrication de la structure acoustique (40) ;
- une étape d'assemblage de la structure acoustique (40) avec ladite paroi fabriquée formant la lèvre (31) et tout ou partie des parois interne (32) et/ou externe (33).

## Patentansprüche

1. Lufteinlass (3) für ein Maschinenhaus (1) eines Flugzeugmotors (6), wobei der Lufteinlass (3) eine vordere Lippe (31) aufweist, die eine im Wesentlichen zylindrische Innenwand (32) und eine im Wesentlichen zylindrische Außenwand (33) verbindet, wobei der Lufteinlass mindestens eine akustische Struktur (40) aufweist, die akustische Zellen (41) aufweist, wobei die akustische Struktur (40) in einem Raum (50) liegt, der von der Innenwand (32), der Außenwand (33) und der vorderen Lippe (31) begrenzt ist, wobei die akustische Struktur (40) ein Anbauteil ist, das durch Befestigungsmittel (60) an dem Lufteinlass (3) befestigt ist, wobei die akustischen Zellen der akustischen Struktur (40) gegenüber einem Bereich der Innenwand (32) und/oder der Lippe (31) in einem vorbestimmten Abstand (d) angeordnet sind, der so konfiguriert ist, dass die akustischen Zellen (41) der akustischen Struktur (40) nicht mit der Innenwand (32) und/oder der Lippe (31) in Kontakt sind und gleichzeitig eine akustische Dämpfungsfunktion gewährleistet wird, wobei der Lufteinlass **dadurch gekennzeichnet ist, dass** der vorbestimmte Abstand, der die akustischen Zellen (41) von dem Bereich der Innenwand (32) und/oder der Lippe (31) trennt, weniger als 1,5 mm beträgt oder im Wesentlichen gleich 1,5 mm ist.

2. Lufteinlass (3) nach einem der vorhergehenden Ansprüche, wobei die akustische Struktur (40) an ihrem stromabwärtigen Ende an einem Winkel oder Flansch (70) oder einer Trennwand (80) befestigt ist.

3. Lufteinlass (3) nach einem der vorhergehenden Ansprüche, wobei die akustische Struktur (40) an ihrem stromaufwärtigen Ende an der Innenwand (32) und/oder der Lippe (31) befestigt ist.

4. Lufteinlass (3) nach Anspruch 2, wobei die akustische Struktur (40) gegenüber diesem Winkel oder Flansch (70) oder dieser Trennwand (80) freitragend montiert ist.

5. Lufteinlass (3) nach einem der vorhergehenden Ansprüche, wobei die akustische Struktur (40) eine Wabenstruktur (41) und eine akustisch widerstandsfähige Haut (42) besitzt, die vorzugsweise aus einer Metalllegierung gebildet sind.

6. Lufteinlass (3) nach einem der vorhergehenden Ansprüche, wobei die akustische Struktur (40) durch Löten, additive Fertigung, Tiefziehen, Umformen von Einsatzblechen, Gießen oder Spritzen gebildet wird.

7. Lufteinlass (3) nach einem der vorhergehenden Ansprüche, der ein Enteisungssystem aufweist, das einen Enteisungsluftstrom aus dem Lufteinlass (3) erzeugt, der so eingerichtet ist, dass er diesen Luftstrom durch Öffnungen (34), die stromaufwärts der akustischen Struktur liegen, und/oder durch Perforationen (44) der Innenwand (32) und/oder der Lippe (31) des Bereichs, der gegenüber der akustischen Struktur (40) liegt und eine perforierte Haut für die akustische Struktur (40) bildet, leitet.

8. Lufteinlass (3) nach einem der vorhergehenden Ansprüche, wobei die Befestigungsmittel (60) der akustischen Struktur (40) an dem Maschinenhaus Nieten und/oder Schweißen und/oder Kleben sind.

9. Maschinenhaus (1) für einen Flugzeugmotor (6), das einen Lufteinlass (3) nach einem der vorhergehenden Ansprüche umfasst.

10. Verfahren zum Herstellen eines Lufteinlasses (3) nach einem der Ansprüche 1 bis 8, umfassend die folgenden Schritte:
- einen Schritt des Herstellens einer Lippe (31) und aller oder eines Teils der Innen- (32) und/oder der Außenwand (33);
- einen Schritt des Herstellens der akustischen Struktur (40);
- einen Schritt des Montierens der akustischen Struktur (40) mit der hergestellten Wand, die die Lippe (31) und alle oder einen Teil der Innen- (32) und/oder der Außerwand (33) bildet.

## Claims

1. An air intake (3) for an aircraft engine (6) nacelle (1), the air intake (3) including a front lip (31) connecting a substantially cylindrical inner wall (32) and a substantially cylindrical outer wall (33), the air intake including at least one acoustic structure (40) comprising acoustic cells (41), the acoustic structure (40) being located in a space (50) delimited by the inner wall (32), the outer wall (33) and the front lip (31), the acoustic structure (40) being a separate part fastened to the air intake (3) by fastening means (60), the acoustic cells of the acoustic structure (40) being arranged facing an area of the inner wall (32) and/or the lip (31) at a predetermined distance (d) configured so that the acoustic cells (41) of the acoustic structure (40) are not in contact with the inner wall (32) and/or the lip (31) while ensuring an acoustic attenuation function, the air intake being **characterized in that** the predetermined distance separating the acoustic cells (41) from said area of the inner wall (32) and/or the lip (31) is less than 1.5 mm or substantially equal to 1.5 mm.

2. The air intake (3) according to any one of the preceding claims, the acoustic structure (40) being fastened at its downstream end to an angle bracket or flange (70) or a partition (80).

3. The air intake (3) according to any one of the preceding claims, the acoustic structure (40) being fastened at its upstream end to the inner wall (32) and/or the lip (31).

4. The air intake (3) according to claim 2, the acoustic structure (40) being mounted in a cantilevered manner with respect to this angle bracket or flange (70) or partition (80).

5. The air intake (3) according to any one of the preceding claims, the acoustic structure (40) having a cellular structure (41) and an acoustically resistive skin (42), preferably formed from a metal alloy.

6. The air intake (3) according to any one of the preceding claims, the acoustic structure (40) being formed by brazing, additive manufacturing, stamping, separate sheet metal forming, molding or injection.

7. The air intake (3) according to any one of the preceding claims, including a de-icing system generating a de-icing airflow for the air intake (3), which is configured to guide this airflow through orifices (34) located upstream of the acoustic structure, and/or through perforations (44) of the inner wall (32) and/or the lip (31) of the area facing the acoustic structure (40) forming a perforated skin for said acoustic structure (40).

8. The air intake (3) according to any one of the preceding claims, the fastening means (60) of the acoustic structure (40) to the nacelle being rivets and/or welding and/or bonding.

9. A nacelle (1) for an aircraft engine (6) including an air intake (3) according to any one of the preceding claims.

10. A method for manufacturing an air intake (3) according to any one of claims 1 to 8, comprising the following steps:
- a step of manufacturing a lip (31) and all or part of the inner (32) and/or outer (33) walls;
- a step of manufacturing the acoustic structure (40);
- a step of assembling the acoustic structure (40) with said manufactured wall forming the lip (31) and all or part of the inner (32) and/or outer (33) walls.
